# EUROPÄISCHE PATENTANMELDUNG

(11) **EP 1 148 090 A1**
(43) Veröffentlichungstag der Anmeldung: **24.10.2001**
(21) Anmeldenummer: 01810362.2
(22) Anmeldetag: 11.04.2001
(51) Int. Cl.: C08K 5/527, C08K 5/5337, C08K 5/00, C08L 33/20, C08L 55/02, C09K 21/08, D01F 6/18, D06M 13/29

(54) **Flammgeschützte polymere**

(30) Priorität: 17.04.2000 CH 7572000
(71) Anmelder: Clariant Finance (BVI) Limited, Road Town, Tortola (VG)
(72) Erfinder: Staniek, Peter, 79589 Binzen (DE)
(74) Vertreter: D'haemer, Jan Constant

(57) **Zusammenfassung**

Die vorliegende Erfindung betrifft die Verwendung von Phosphorverbindungen der Formel (I) oder (II) 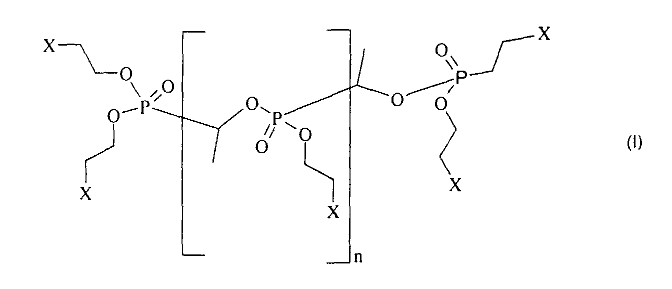 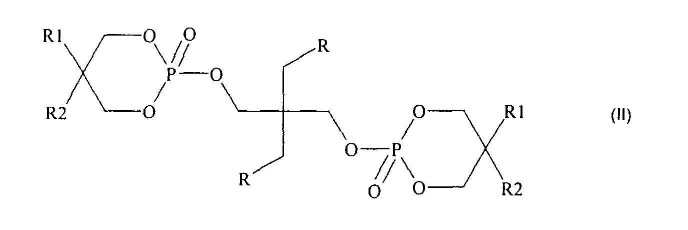 als Flammschutzmittel für Fasern oder Filme aus Polyacrylnitril, dessen Copolymere oder Polymerblends daraus. X und R stehen bevorzugt für Chlor, R1 und R2 bevorzugt für Methyl, n bevorzugt für 0-5.

## Beschreibung

Die Erfindung betrifft die Verwendung von bestimmten Phosphorverbindungen als Flammschutzmittel für Fasern oder Filme aus Polyacrylnitril oder dessen Copolymere.

Fasern oder Filme aus Polyacrylnitril oder dessen Copolymere sind als brennbar einzustufen und bedürfen daher in bestimmten Anwendungen, wie z.B. im Flugzeugbau, einer Flammschutzausrüstung. Polymere werden häufig dadurch flammwidrig ausgerüstet, dass man diesen phosphorhaltige oder halogenhaltige Verbindungen oder Gemische davon zusetzt. Auch Gemische von phosphor- und stickstoffhaltigen Verbindungen werden oft als Flammhemmer verwendet. Jedoch besteht immer noch ein Bedarf an verbesserten Flammschutzmitteln.

Überraschenderweise wurde nun gefunden, dass die Phosphorverbindungen der Formeln (I) und (II) hervorragende Flammschutzmittel für Fasern oder Filme aus Polyacrylnitril oder dessen Copolymere oder Polymerblends daraus sind.

Gegenstand der Erfindung ist somit die Verwendung von Phosphorverbindungen der Formeln (I) oder (II) 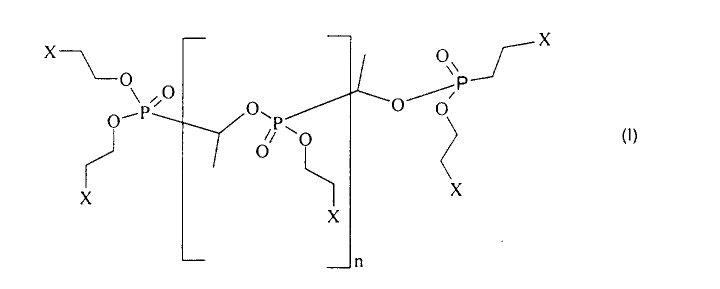 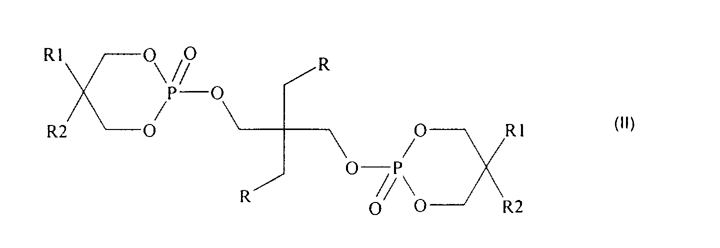 wobei
- X: Chlor oder Brom, vorzugsweise Chlor bedeutet,
- R₁, R₂: unabhängig voneinander Wasserstoff, C₁₋₁₈-Alkyl, C₆₋₁₈-Aryl, C₇₋₂₄-Alkylaryl, vorzugsweise C₁₋₁₂-Alkyl, Phenyl, Benzyl, insbesondere C₁₋₆-Alkyl, ganz vorzugsweise Methyl bedeuten oder wobei R₁ und R₂ zusammen einen Cyclohexyl- oder Cyclohexenylrest, vorzugsweise einen Cyclohexylrest, bilden, und wobei
- R: Chlor, Brom oder eine Gruppe der Formel (III) 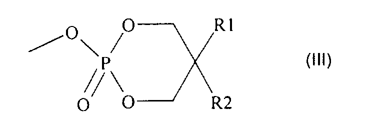 bedeutet, und wobei
- n: eine Zahl zwischen 0 und 20, vorzugsweise zwischen 0 und 10, insbesondere zwischen 0 und 5 darstellt,
als Flammschutzmittel für Polyacrylnitril, dessen Copolymere oder Polymerblends daraus, insbesonders zur Verwendung in Fasern oder Filmen dieser Materialien.

Bevorzugt sind Verbindungen der Formel (I) oder (II), wobei
- X: Chlor,
- R: Chlor oder eine Gruppe der Formel (III),
- R₁, R₂: C₁₋₆-Alkyl oder zusammen einen Cyclohexylrest, und
- n: eine Zahl von 0 bis 10 bedeutet.

Besonders bevorzugt sind Verbindungen der Formel (I) oder (II), wobei
- X: Chlor,
- R: Chlor,
- R₁, R₂: Methyl, und
- n: eine Zahl von 0 bis 5 bedeutet.

Eine Flammschutzwirkung wird bei Konzentrationen von 1-30 Gew.-%, bevorzugt bei 5-20 Gew.-% und besonders bevorzugt von 10-20 Gew.-%, bezogen auf die die Gesamtmasse der Polymerzubereitung, erreicht.

Die Verbindungen der Formeln (I) und (II) sind als Flammschutzmittel für Polymethylmethacrylat beispielsweise aus DE-A-3 838 480 bekannt, ihre hervorragende Eignung für Polyacrylnitril oder dessen Copolymere lässt sich daraus aber nicht entnehmen.

Die zu stabiliserenden Polymere sind entweder Homopolymere des Acrylnitrils (PAN), Copolymere dieses Monomeren oder Polymer Blends, die dieses Material enthalten. Ebenfalls eingeschlossen sind Gemische von polyacrylnitrilhaltigen Fasern mit anderen Fasermaterialien wie z.B. Baumwolle, Viskose, Wolle, Polyamid, Polyester und dergleichen, die gegebenenfalls auch für sich mit den gleichen erfindungsgemäßen oder auch anderen Flammschutzmitteln ausgerüstet sein können.

Eine nicht begrenzende Auswahl an solchen oben genannten Polymeren sind:

Acrylnitril-Butadien-Copolymere, Acrylnitril-Butadien-Styrol-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere, Propfcopolymere aus Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als sogenannte ABS-Polymere bekannt sind.

Die beschriebenen Polymere können in den verschiedensten Formen, wie zum Beispiel als Folie, Film, Gußmaterial, Spritzgußteile, Faser oder Hohlfasern zur Anwendung kommen.

In diesen Polymeren können weitere Additive wie z.B. Antioxidantien, Lichtschutzmittel (UV-Absorber und/oder HALS-Verbindungen), Metalldesaktivatoren, peroxidzerstörende Verbindungen, Polyamidstabilisatoren, basische Co-Stabilisatoren, Nukleierungsmittel, Füllstoffe, Verstärkungsmittel, Weichmacher, Gleitmittel, Emulgatoren, Pigmente und Farbstoffe, optische Aufheller, Flammschutzmittel, Antistatika, Treibmittel, usw. enthalten sein.

Im einzelnen kann es sich dabei um folgende Verbindungen handeln:
1. Antioxidantien
   1.1 Alkylierte Monophenole, z.B. 2,6 Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethyl-phenol, 2,6-Di-octadecyl-4-methylphenol, 2,4,6-Tricyclohexylphenol, 2,6-Di-tert-butyl-4-methoxymethylphenol, lineare oder in der Seitenkette verzweigte Nonylphenole, wie z. B. 2,6-Dinonyl-4-methylphenol, 2,4-Dimethyl-6(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2 Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Didodecylthiomethyl-4-nonyl-phenol.
   1.3 Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxy-phenyl)adipat.
   1.4 Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methyl-phenol), 4,4'-Thio-bis-(3,6-di-sec.-amylphenol), 4,4'-Bis-(2,6-dimethyl-4-hydroxyphenyl)-disulfid.
   1.5 Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(a -methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonyl-phenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methyl-phenol, 1,1,3-Tris-(5-tert-butyl-4-hydroxy-2-methyl-phenyl)-butan, 1,1-Bis-(5-tert-butyl-4-hydroxy-2-methylphenyl)-3-n-dodecylmercaptobutan, Bis-(3-tert-butyl-4-hydroxy-5-methylphenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methyl-phenyl)-pentan, Ethylenglycol-bis[3,3-bis(3'-tert-butyl-4'-hydroxyphenyl)butyrat].
   1.6 O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat, Tridecyl-4-hydroxy-3,5-di-tert-butylbenzyl-mercaptoacetat.
   1.7 Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis-(3,5-di-tert-butyl-4-hydroxybenzyl)-malonat, Di-[4(1,1,3,3-tetramethylbutyl)-phenyl]-2,2-bis(3,5-di-tert-butyl-4-hydroxybenzyl)malonat.
   1.8 Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.9 Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   1.10 Benzylphosphonate, z.B. Dimethyl-25-di-tert-butyl-4-hydroxybenzyl-phosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-di-tert-butyl-4-hydroxybenzylphosphonsäure-monoethylesters.
   1.11 Acylaminophenole, z.B. 4-Hydroxy-laurinsäureanilid, 4-Hydroxy-stearinsäureanilid, N-(3,5-di-tert-butyl-4-hydroxyphenyl)-carbaminsäureoctylester.
   1.12 Ester der β-(3,5-Di-tert-butyl-4-hydroxyphenyl)-propionsäure mit ein- oder mehrwertigen Alkoholen, wie mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,2]-octan.
   1.13 Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodietyhlenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,2]-octan.
   1.14 Ester der β-(3,5-Dicyclohexyl-4-hydroxyphenyl)-propionsäure mit ein- oder mehrwertigen Alkoholen, wie z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-(2,2,2)-octan.
   1.15 Ester der 3,5-Di-tert-butyl-4-hydroxyphenylessigsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,2]-octan.
   1.16 Ester der 3,3-Bis-(3'-tert-butyl-4'-hydroxyphenyl)-buttersäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2,2]-octan.
   1.17 Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N' -Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
   1.18. Tocopherol, wie z. B. α-Tocopherol, β-Tocopherol, γ-Tocopherol, δ-Tocopherol und Mischungen davon (Vitamin E).
   1.19. Ascorbinsäure (Vitamin C).
   1.20. Aminische Antioxidantien, wie z. B. N, N=-Di-isopropyl-p-phenylendiamin, N,N=-Di-sec-butyl-p-phenylendiamin, N,N=-Bis(1,4-dimethyl-pentyl)-p-phenylendiamin, N,N=-Bis(1-ethyl-3-methyl-pentyl)-p-phenylendiamin, N,N=-Bis(1-methyl-heptyl)-p-phenylendiamin, N,N=-Dicyclohexyl-p-phenylendiamin, N,N=-Diphenyl-p-phenylendiamin, N,N=-Di(naphthyl-2-)-p-phenylendiamin, N-lsopropyl,N=-phenyl-p- phenylendiamin, N-(1,3-Dimethyl-butyl)-N=-phenyl-p-phenylendiamin, N-(1-Methyl-heptyl)-N=-phenyl p-phenylendiamin, N-Cyclohexyl-N=-phenyl-p-phenylendiamin, 4-(p-Toluolsulfonamido)-diphenylamin, N,N=-Dimethyl-N,N=-di-sec-butyl-p-phenylendiamin, Diphenylamin, N-Allyldiphenylamin, 4-Isopropoxy-diphenyl-amin, N-Phenyl-1-naphthylamin, N-(4-tert-octylphenyl)-1-naphthylamin, N-Phenyl-2-naphthylamin, octyliertes Diphenylamin, z. B. p,p=-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Di(4-methoxyphenyl)-amin, 2,6-Di-tert-butyl-4-dimethylamino-methyl-phenol, 2,4=-Diamino-diphenylmethan, 4,4=-Diamino-diphenylmethan, N,N,N=,N=-Tetramethyl-4,4=diamino-diphenylmethan, 1,2-Di-[(2-methyl-phenyl)-amino]-ethan, 1,2-Di-(phenylamino)-propan, (o-Tolyl)-biguanid, Di-[4-(1=,3=-di-methyl-butyl)-phenyl]amin, tert-octyliertes N-Phenyl-1-naphthylamin, Gemisch aus mono- und dialkylierten tert Butyl-/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemisch aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octylphenothiazinen, Gemisch aus mono- und dialkylierten tert-Octyl-phenothiazinen, N-Allylphenothiazin, N,N,N=,N=-Tetra-phenyl-1,4-diaminobut-2-en, N,N-Bis(2,2,6,6-tetramethylpiperidin-4-yl)-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.
**2. UV-Absorber und Lichtschutzmittel**
   2.1 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-[2'-Hydroxy-5'-(1,1,3,3-tetramethylbutyl)phenyl]-benztriazol, 2-(3',5'-Di-tert-butyl-2'-hydroxy-phenyl)-5-chlor-benztriazol,2-(3' -tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctylocycarbonylethyl)phenyl-benztriazol, 2,2'-Methylen-bis-[4-(1,1,3,3-tetramethylbutyl)-6-benztriazol-2-yl-phenol]; Umesterungsprodukt von 2-[3'-tert-Butyl-5'(2-methoxycarbonylethyl)-2'-hydroxyphenyl]-benztriazol mit Polyethylenglycol 300; [R-CH₂CH₂-COO(CH₂)₃]-₂ mit R = 3'-tert-Butyl-4'-hydroxy-5'-2H-benztriazol-2-yl-phenyl.
   2.2 2-Hydroxybenzophenone, wie z.B. das 4-Hydroxy-, 4-Methoxy-, 4-Octoxy, 4-Decyloxy, 4-Dodecyloxy-, 4-Benzyloxy-, 4,2',4'-Trihydroxy-, 2'-Hydroxy-4,4'-dimethoxy-Derivat.
   2.3 Ester von gegebenenfalls substituierten Benzoesäuren, wie z.B. 4-tert-Butyl-phenylsalicylat, Phenylsalicylat, Octylphenylsalicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzosäurehexadecylester, 3,5-Di-tert-butyl-4-hydroxy-benzoesäureoctadecylester, 3,5-Di-tert-butyl-4-hydroxybenzoesäure-2-methyl-4,6-di-tert-butylphenylester.
   2.4 Acrylate wie z.B. α-Cyan-β,β-diphenylacrylsäureethylester bzw. -isooctylester, α-Carbomethoxyzimtsäuremethylester, α-Cyano-β-methyl-p-methoxyzimtsäuremethylester bzw. -butylester, α-Carbomethoxy-p-methoxy-zimtsäuremethylester, N-(β-Carbomethoxy-β-cyanovinyl)-2-methylindolin.
   2.5 Nickelverbindungen wie z.B. Nickelkomplexe des 2,2'-Thio-bis-[4-(1,1,3,3 tetramethylbutyl)-phenols] wie der 1:1 oder der 1:2 Komplex, gegebenenfalls mit zusätzlichen Liganden, wie n-Butylamin, Triethanolamin oder N-Cyclohexyldiethanolamin, Nickeldibutyldithiocarbamat, Nickelsalze von 4-Hydroxy-3,5-di-tert-butyl-benzylphosphonsäuremonoalkylestern, wie vom Methyl- oder Ethylester, Nickelkomplexe von Ketoximen, wie von 2-Hydroxy-4-methyl-phenylundecylketoxim, Nickelkomplexe des 1-Phenyl-4-lauroyl-5-hydroxy-pyrazols, gegebenenfalls mit zusätzlichen Liganden.
   2.6 Sterisch gehinderte Amine, wie z.B. Bis-(2,2,6,6-tetramethyl-piperidin-4-yl)-sebacat, Bis-(2,2,6,6-tetramethylpiperidin-4-yl)-glutarat, Bis-(2,2,6,6-tetramethyl-piperidin-4-yl)-succinat, Bis-(1,2,2,6,6-pentamethylpiperidin-4-yl)-sebacat, Bis-(1,2,2,6,6-pentamethylpiperidin-4-yl)-glutarat, n-Butyl-3,5-di-tert-butyl-4-hydroxybenzylmalonsäure-bis(1,2,2,6,6-pentamethylpiperidyl)-ester, 2,2,6,6-Tetramethylpiperidylbehenat, 1,2,2,6,6-Pentamethylpiperidylbehenat, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, 4-Stearoyloxy-2,2,6,6-tetramethylpiperidin, 4-Stearyloxy-1,2,2,6,6-pentamethylpiperidin, 4-Stearoyloxy-1,2,2,6,6-pentamethylpiperidin, Bis-(1,2,2,6,6-pentamethylpiperidyl)-2-n-butyl-2-(2-hydroxy-3,5-di-tert-butylbenzyl)-malonat, Bis-(1,2,2,6,6-pentamethylpiperidyl)-2-n-butyl-2-(4-hydroxy-3,5-di-tert-butylbenzyl)-malonat, 3-n-Octyl-7,7,9,9-tetramethyl-1,3,8-triazaspiro [4,5] decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus N,N=-Bis(2,2,6,6-tetramethyl-4-piperidyl)-hexamethylendiamin und 4-Cyclohexylamino-2,6-dichlor-1,3,5-triazin, Kondensationsprodukt aus 2-Chlor-4,6-di-(4-n-butylamino-2,2,6,6-tetramethyl-piperidyl)-1,3,5-triazin und 1,2-Bis-(3-aminopropylamino)ethan, Kondensationsprodukt aus 2-Chlor-4,6-di-(4-methoxypropylamino-2,2,6,6-tetramethylpiperidyl)-1,3,5-triazin und 1,2-Bis-(3-aminopropylamino)ethan, Kondensationsprodukt aus 2-Chlor-4,6-di-(4-methoxypropylamino-1,2,2,6,6-pentamethylpiperidyl)-1,3,5-triazin und 1,2-Bis-(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)ethan, Umsetzungsprodukte von 2-Chlor-4,6-di-(4-n-butylamino-2,2,6,6-tetramethylpiperidyl)-1,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)äthan, Umsetzungsprodukte von 2-Chlor-4,6-di-(4-n-butylamino-1,2,2,6,6-pentamethylpiperidyl)-1,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)ethan, Umsetzungsprodukte von 2-Chlor-4,6-di-(4-n-butylamino-2,2,6,6-tetramethyl-piperidyl)-1,3,5-triazin und 4-tert-Octylamino-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)ethan, Umsetzungsprodukte von 2-Chlor-4,6-di-(4-n-butylamino-1,2,2,6,6-pentamethylpiperidyl)-1,3,5-triazin und 4-tert-Octylamino-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropyl-amino)ethan, Umsetzungsprodukte von 2-Chlor-4,6-di-(4-n-butylamino-2,2,6,6-tetra-methylpiperidyl)-1,3,5-triazin und 4-(4-n-Butylamino-2,2,6,6-tetramethylpiperidyl)-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)-ethan, Umsetzungsprodukte von 2-Chlor-4,6-di-(4-n-butylamino-1,2,2,6,6-pentamethylpiperidyl)-1,3,5-triazin und 4-(4-n-Butylamino-2,2,6,6-tetramethylpiperidyl)-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)ethan, Kondensationprodukt aus 1,2-Bis(3-aminopropylamino)-ethan und 2,4,6-Trichlor-1,3,5-triazin sowie 4-Butylamino-2,2,6,6-tetramethylpiperidin, N-(2,2,6,6-tetramethyl-4-piperidyl)-n-dodecylsuccinimid, N-(1,2,2,6,6-pentamethyl-4-piperidyl)-n-dodecylsuccinimid, 8-Acetyl-3-Dodecyl-7,7,9,9-tetramethyl-1,3,8-triazaspiro[4,5]decan-2,4-dion, Oligomerisiertes 2,2,4,4-Tetramethyl-20-(oxiranylmethyl)-7-oxa-3,20-diaza-dispiro[5.1.11.2]heneicosan-21 -on, Oligomerisiertes 1,2,2,4,4-Pentamethyl-20-(oxiranylmethyl)-7-oxa-3,20-diazadispiro-[5.1.11.2]heneicosan-21-on, Oligomerisiertes 1-Acetyl-2,2,4,4-tetramethyl-20-(oxiranylmethyl)-7-oxa-3,20-diaza-dispiro[5.1.11.2]heneicosan-21-on, 3-Dodecyl-1-(2,2,6,6-tetra-methyl-4-piperidyl)pyrrolidin-2,5-dion, 3-Dodecyl-1-(1,2,2,6,6-pentamethyl-4-piperidyl)-pyrrolidin-2,5-dion, 2,2,4,4-Tetramethyl-7-oxa-3,20-diazadispiro-[5.1.11.2]-heneicosan-21-on, 2,2,4,4-Tetramethyl-7-oxa-21-oxo-3,20-diazadispiro-[5.1.11.2]-heneicosan-3-propansäure-dodecylester, 2,2,4,4-Tetramethyl-7-oxa-21-oxo-3,20-diazadispiro-[5.1.11.2]-heneicosan-3-propansäuretetradecylester, 2,2,3,4,4-Pentamethyl-7-oxa-3,20-diazadispiro-[5.1.11.2]heneicosan-21 -on, 2,2,3,4,4-Pentamethyl-7-oxa-21-oxo-3,20-diaza-dispiro-[5.1.11.2]heneicosan-3-propansäuredodecylester, 2,2,3,4,4-Pentamethyl-7-oxa-21-oxo-3,20-diazadispiro-[5.1.11.2]-heneicosan-3-propansäuretetradecylester, 3-Acetyl-2,2,4,4-tetramethyl-7-oxa-3,20-diazadispiro-[5.1.11.2]heneicosan-21-on, 3-Acetyl-2,2,4,4-tetramethyl-7-oxa-21-oxo-3,20-diaza-dispiro-[5.1.11.2]heneicosan-3-propansäure-dodecylester, 3-Acetyl-2,2,4,4-tetramethyl-7-oxa-21-oxo-3,20-diazadispiro-[5.1.11.2]heneicosan-3-propansäuretetradecylester, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)-biphenyl, Poly-N,N'-bis-(2,2,6,6-tetramethyl-4-piperidyl)-1,8-diazadecyclen, Additionsverbindung von 2,2,6,6-Tetramethyl-4-allyloxy-piperidin und Polymethylhydrogensiloxan (Molmasse bis 4000), Additionsverbindung von 1,2,2,6,6-Pentamethyl-4-allyloxypiperidin und Polymethylhydrogensiloxan (Molmasse bis 4000), N,N'-Di-formyl-N,N'-bis-(2,2,6,6-tetramethyl-4-piperidinyl)-hexamethylendiamin, N,N'-Di-formyl-N,N'-bis-(1,2,2,6,6-pentamethyl-4-piperidinyl)-hexamethylendiamin, 5,11-Bis-(2,2,6,6-tetramethyl-4-piperidinyl)-3,5,7,9,11,13-hexaaza-tetracyclo-[7.4.0.0^{2,7}.1^{3,13}]-tetradecan-8,14-dion, 5,11-Bis-(1,2,2,6,6-pentamethyl-4-piperidinyl)-3,5,7,9,11,13-hexaazatetracyclo-[7.4.0.0^{2,7}.1^{3,13}]-tetradecan-8,14-dion, [(4-Methoxyphenyl)-methylen]-propandisäure-bis-(2,2,6,6-tetramethyl-4-piperidinyl)-ester, [(4-Methoxyphenyl)-methylen]-propandisäure-bis-(1,2,2,6,6-pentamethyl-4-piperidinyl)-ester, 2,4,6-Tris-(N-cyclohexyl-N-[2-(3,3,4,5,5-pentamethyl-piperazinon-1-yl)-ethyl]-amino)-1,3,5-triazin, Copolymerisat aus Styrol mit Methylstyrol und Maleinsäureanhydrid umgesetzt mit 4-Amino-2,2,6,6-tetramethylpiperidin und Octadecylamin, Copolymerisat aus Styrol mit α-Methylstyrol und Maleinsäureanhydrid umgesetzt mit 4-Amino-1,2,2,6,6-pentamethylpiperidin und Octadecylamin, Polycarbonat mit 2,2'-[(2,2,6,6-Tetramethyl-4-piperidinyl)-imino]-bis-[ethanol] als Diolkomponente, Polycarbonat aus 2,2'-(1,2,2,6,6-Pentamethyl-4-piperidinyl)-imino]-bis-[ethanol] als Diolkomponente, Copolymer aus Maleinsäureanhydrid und einem α-Olefin bis C₃₀ umgesetzt mit 4-Amino-2,2,6,6-tetramethylpiperidin, Copolymer aus Maleinsäureanhydrid und einem α-Olefin bis C₃₀ umgesetzt mit 1-Acetyl-4-amino-2,2,6,6-tetramethylpiperidin, Copolymer aus Maleinsäureanhydrid und einem α-Olefin bis C₃₀ umgesetzt mit 4-Amino-1,2,2,6,6-pentamethylpiperidin, sowie die N-Alkyl- und N-Aryl-oxyderivate der oben genannten Verbindungen mit freien NH-Gruppen am Piperidin, speziell α-Methylbenzyloxy- und Alkyloxy- von C₁ bis C₁₈.
   2.7 Oxalsäurediamide, wie z.B. 4,4'-Di-octyloxyoxanilid, 2,2=-Diethoxyoxanilid, 2,2'-Di-octyloxy-5,5'-di-tert-butyl-oxanilid, 22'-Di-dodecyloxy-55'-di-tert-butyl-oxanilid, 2-Ethoxy-2'-ethyloxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris-(2-hydroxy-4-octyloxyphenyl)-1,3,5-triazin, 2-(2-Hydroxy-4-octyloxyphenyl)-4=,6-bis-(2=,4-dimethylphenyl)-1,3,5-triazin, 2-(2,4-Dihydroxyphenyl)-4,6-bis-(2,4-dimethylphenyl)-1,3,5-triazin, 2-(2,4-Dihydroxyphenyl)-4,6-bis-(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-di-methylphenyl)-1,3,5-triazin, 2-[2-Hydroxy-4-(2-hydroxy-3-butyloxypropyloxy)phenyl]-46-bis(24-dimethylphenyl)-1,3,5-triazin, 2-[2-hydroxy-4-(2-hydroxy-3-octyloxypropyloxy)phenyl]-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[4-dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-46-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)-phenyl]-1,3,5-triazin, 2-(2-Hydroxyphenyl)-4-(4-methoxyphenyl)-6-phenyl-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäuredihydrazid, Sebacinsäurebisphenylhydrazid, N,N'-Diacetyladipinsäuredihydrazid, N,N'-Bis-salicyloyloxalsäuredihydrazid, N,N'-Bis-salicyloylthiopropionsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearylpentaerythritdiphosphit, Tris-(2,4-di-tert-butylphenyl)-phosphit, Diisodecylpentaerythritdiphosphit, Bis-(24-di-tert-butylphenyl)-pentaerythritdiphosphit, Bis-(2,6,-di-tert-butyl-4-methylphenyl)-pentaerythritdiphosphit, Bis-isodecyloxy-penta-erythritdiphosphit, Bis-(2,4-di-tert-butyl-6-methylphenyl)-pentaerythritdiphosphit, Bis-(2,4,6-tri-tert-butylphenyl)-pentaerytritdiphosphit, Tristearylsorbit-triphosphit, Tetrakis-(2,4-di-tert-butylphenyl)-4,4'-biphenylendiphosphonit, 6-lsooctyloxy-2,4,8,10-tetra-tert-butyl-12H-di-benz[d,g]-1,32-dioxaphosphocin, 6-Fluor-2,4,8,10-tetra-tert-butyl-12-methyl-dibenz[dg]-1,3,2-dioxaphophocin, Bis-(2,4-di-tert-butyl-6-methylphenyl)-methylphosphit, Bis-(2,4-di-tert-butyl-6-methylphenyl)-ethylphosphit, Tris(2-tert-butyl-4-thio(2'-methyl-4'-hydroxy-5'-tert-butyl)-phenyl-5-methyl)-phenylphosphit, 2,2=,2==-Nitrilo[triethyl-tris(3,3=,5,5=-tetra-tert-butyl-1,1=-biphenyl-2,2=-diyl)phosphit], Bis[2-methyl-4,6-bis(1,1-dimethylethyl)phenol]phosphorigsäureethylester.
5. Hydroxylamine, wie z. B. N,N-Dibenzylhydroxylamin, N,N-Diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylaminen hergestellt aus hydriertem Talgfettamin.
6. Nitrone, wie z. B. N-Benzyl-alpha-phenylnitron, N-Ethyl-alpha-methylnitron, N-Octyl-alphaheptyl-nitron, N-Lauryl-alphaundecylnitron, N-Tetradecyl-alpha-tridecylnitron, N-Hexadecyl-alpha-pentadecylnitron, N-Octadecyl-alpha-heptadecyl-nitron, N-Hexadecyl-alpha-heptadecylnitron, N-Octadecyl-alpha-pentadecylnitron, N-Heptadecyl-alpha-heptadecylnitron, N-Octa-decyl-alpha-hexadecylnitron, Nitrone abgeleitet von N,N-Dialkylhydroxylaminen, hergestellt aus hydrierten Talgfettaminen.
7. Zeolithe und Hydrotalcite, wie z. B. ⁷DHT 4A. Solche Hydrotalcite können nach der allgemeinen Formel

   [(M²⁺)₁₋ₓ (M³⁺)ₓ (OH)₂ (Aⁿ⁻)_{x/n} yH₂O],

   beschrieben werden, wobei
   - (M²⁺): bedeutet Mg, Ca, Sr, Ba, Zn, Pb, Sn, Ni
   - (M³⁺): bedeutet Al, B, Bi
   - Aⁿ: bedeutet ein Anion der Wertigkeit n
   - n: bedeutet eine ganze Zahl von 1 - 4
   - x: bedeutet einen Wert zwischen 0 und 0,5
   - y: bedeutet einen Wert zwischen 0 und 2

   A bedeutet OH⁻, Cl⁻, Br⁻, l⁻, ClO₄-, CH₃COO⁻, C₆H₅COO⁻, CO₃²⁻, SO₄²⁻, (OOC-COO)²⁻, (CHOHCOO)₂²⁻, HO(CHOH)₄CH₂COO⁻, C₂H₄(COO)₂²⁻, (CH₂COO)₂²⁻, CH₃CHOHCOO⁻, SiO₃²⁻, SiO₄⁴⁻, Fe(CN)₆³⁻, Fe(CN)₆⁴⁻, BO₃³⁻, PO₃³⁻, HPO₄²⁻.
   Bevorzugt eingesetzt werden Hydrotalcite, in welchen (M²⁺) für (Ca²⁺), (Mg²⁺) oder eine Mischung aus (Mg²⁺) und (Zn²⁺); (Aⁿ⁻) für CO₃²⁻, BO₃³⁻, PO₃³⁻ stehen. x hat einen Wert von 0 bis 0,5 und y hat einen Wert von 0 bis 2. Weiterhin können auch Hydrotalcite, die mit der Formel

   [(M²⁺)ₓ (Al³⁺)₂ (OH)_{2x+6nz} (Aⁿ⁻)₂ yH₂O]

   beschrieben werden können, eingesetzt werden. Hier steht (M²⁺) für Mg²⁺, Zn²⁺, bevorzugterweise jedoch Mg²⁺. (Aⁿ⁻) steht für ein Anion, besonders aus der Gruppe CO₃²⁻, (OOC-COO)²⁻, OH⁻ und S²⁻, wobei n die Wertigkeit des lons beschreibt. y steht für eine positive Zahl, bevorzugterweise zwischen 0 und 5, ganz besonders zwischen 0,5 und 5. x und z haben positive Werte, die bei x bevorzugt zwischen 2 und 6 liegen und bei z kleiner als 2 sein sollten. Besonders bevorzugt sind die Hydrotalcite der folgenden Formeln anzusehen:

   Al₂O₃ H 6MgO H CO₂ H 12H₂O,

   Mg_{4.5}Al₂(OH)₁₃ H CO₃ H 3.5H₂O,

   4MgO H Al₂O₃ H CO₂ H 9H₂O,

   4MgO H Al₂O₃ H CO₂ H 6H₂O,

   ZnO H 3MgO H Al₂O₃ H CO₂ H 8-9H₂O,

   ZnO H 3MgO H Al₂O₃ H CO₂ H 5-6H₂O,

   Mg_{4.5}Al₂(OH)₁₃ H CO₃.

   Hydrotalcite werden im Polymer bevorzugt in einer Konzentration von 0.01 bis 5 Gew.%, besonders von 0,2 bis 3 Gew.%, bezogen auf die gesamte Polymerzubereitung, eingesetzt.
8. Thiosynergisten, wie z. B. Thiodipropionsäuredilaurylester oder Thiodipropionsäuredistearylester.
9. Peroxidzerstörende Verbindungen wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyldithiocarbamate, Zinkdibutyl-dithiocarbamat, Dioctadecylmonosulfid, Dioctadecyldisulfid, Pentaerythrit-tetrakis-(β-dodecyl-mercapto)-propionat.
10. Polyamidstabilisatoren, wie z.B. Kupfersalze in Kombination mit Jodiden und/oder Phosphorverbindungen und Salze des zweiwertigen Mangans.
11. Basische Co-Stabilisatoren wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat, Alkali- und Erdalkalisalze sowie das Zinksalz oder das Aluminiumsalz von Milchsäure.
12. Nukleierungsmittel, wie z.B. anorganische Stoffe, wie z. B. Talk, Metalloxide, wie z. B. Titandioxid oder Magnesiumoxid, Phosphate, Carbonate oder Sulfate von vorzugsweise Erdalkalimetallen, organische Verbindungen, wie Mono- oder Polycarbonsäuren sowie auch ihrer Salze, wie z. B. 4-tert-Butylbenzoesäure, Adipinsäure; Diphenylessigsäure; Natriumsuccinat oder Natriumbenzoat; Acetale von aromatischen Aldehyden und polyfunktionellen Alkoholen wie z. B. Sorbitol, wie z.B. 1,3-2,4-Di(benziliden)-D-sorbitol, 1,3-2,4-Di(4-tolyliden)-D-sorbitol, 1,3-2,4-Di(4-ethylbenziliden)-D-sorbitol, polymere Verbindungen, wie z. B. ionische Copolymerisate ("Ionomere").
13. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit, Holzmehl und andere Mehle oder Fasern anderer Naturprodukte, synthetische Fasern.
14. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
15. Benzofuranone bzw. Indoline, wie z. B. in US-4325863, US-4338244, US-5175312; US-5216052; US-5252643, DE-A-4316611, DE-A-4316622, DE-A-4316876, EP-A-0589839 oder EP-A-0591102 beschrieben oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuranon-2-on, 3,3=-Bis[5,7-di-tert-butyl-3-(4-[2-hydroxyethoxy]-phenyl)-benzofuran-2-on, 5,7-Di-tert-butyl-3-(4-ethoxyphenyl)-benzofuran-2-on, 3-(4-Acetoxy-3,5-dimethylphenyl)-5,7-di-tert-butyl-benzofuran-2-on, 3-(3,5-Diethyl-4-pivaloyloxyphenyl)-5,7-di-tert-butyl-benzofuran-2-on.

Die folgenden Beispiele sollen die Erfindung näher erläutern.

### ANWENDUNGSBEISPIEL 1

Ein 15 Gew.-% Poly[oxy[(2-chlorethoxy)phosphinyliden]ethyliden]; □-(2-chlorethyl)-□[[(2-chlorethoxy)(2-chlorethyl)phosphinyl]oxy]-, (CAS Nr. 59036-37-2, Exolit 5087, Fa. Clariant AG) enthaltender gegossener Film aus Polyacrylnitril zeigt gegenüber einem nicht additivierten gleichartig hergestellten Film aus reinem Polyacrylnitril eine verkürzte Brennzeit und Brennlänge im Horizontalbrenntest.

### ANWENDUNGSBEISPIEL 2

Ein 15 Gew.-% 1,3,2-Dioxaphosphoirnan, 2,2'-[[2,2-bis(chlormethyl)-1,3-propandiyl]bis(oxy)]bis[5,5-dimethyl]-, 2,2'-dioxid, (CAS Nr. 83044-97-7, Exolit 5085, Fa. Clariant AG) enthaltender gegossener Film aus Polyacrylnitril zeigt gegenüber einem nicht additivierten gleichartig hergestellten Film aus reinem Polyacrylnitril eine verkürzte Brennzeit und Brennlänge im Horizontalbrenntest.

## Patentansprüche

1. Verwendung von Phosphorverbindungen der Formeln (I) oder (II) 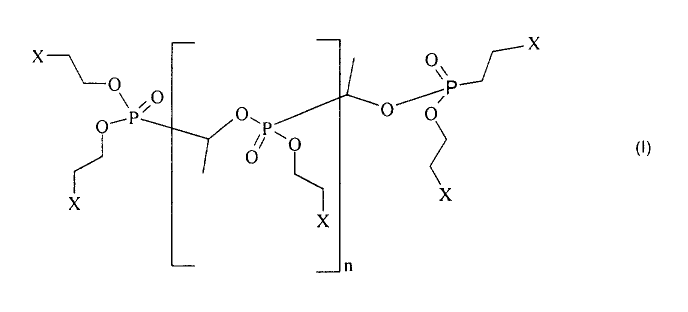 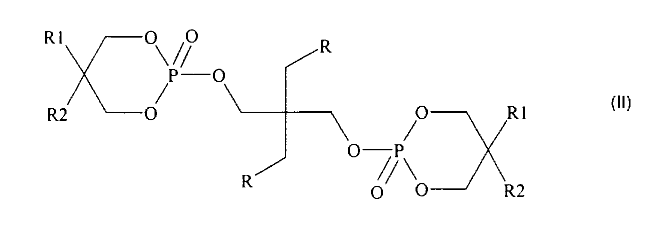 wobei
X Chlor oder Brom bedeutet,
R₁, R₂ unabhängig voneinander Wasserstoff, C₁₋₁₈-Alkyl, C₆₋₁₈-Aryl, C₇₋₂₄-Alkylaryl bedeuten oder wobei R₁ und R₂ zusammen einen Cyclohexyl- oder Cyclohexenylrest bilden, und wobei
R Chlor, Brom oder eine Gruppe der Formel (III) 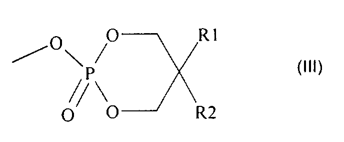 bedeutet, und wobei
n eine Zahl zwischen 0 und 20 darstellt,
als Flammschutzmittel für Polyacrylnitril, dessen Copolymere oder Polymerblends daraus, insbesonders Fasern oder Filme aus diesen Materialien.

2. Verwendung gemäss Anspruch 1, wobei
X Chlor,
R₁, R₂ unabhängig voneinander Wasserstoff, C₁₋₁₂-Alkyl, Phenyl oder Benzyl bedeuten oder wobei R₁ und R₂ zusammen einen Cyclohexylrest bilden, und wobei
R Chlor oder eine Gruppe der Formel (III) bedeutet, und wobei
n eine Zahl zwischen 0 und 10 darstellt.

3. Verwendung gemäss Anspruch 1, wobei
X Chlor,
R Chlor oder eine Gruppe der Formel (III),
R₁, R₂ C₁₋₆-Alkyl oder zusammen einen Cyclohexylrest, und
n eine Zahl von 0 bis 10 bedeutet.

4. Verwendung gemäss Anspruch 1, wobei
X Chlor,
R Chlor,
R₁, R₂ Methyl, und
n eine Zahl von 0 bis 5 bedeutet.

5. Verwendung gemäss den Ansprüchen 1 bis 4, **dadurch gekennzeichnet, dass** 5 - 20 Gew.-%, bezogen auf das zu stabilisierende Polymer, eingesetzt werden.

6. Flammwidrig eingestellte Fasern oder Filme aus Polyacrylnitril, dessen Copolymere oder Polymerblends daraus, enthaltend 5-20 Gew.-%, bezogen auf das Polymer, von Verbindungen der Formel (I) oder (II) gemäss den Ansprüchen 1 bis 4.
